# EUROPÄISCHE PATENTSCHRIFT

(11) **EP 2 218 944 B1**
(45) Veröffentlichungstag und Bekanntmachung des Hinweises auf die Patenterteilung: **15.08.2012**
(21) Anmeldenummer: 09179001.4
(22) Anmeldetag: 14.12.2009
(51) Int. Cl.: F16H 55/06, F16H 55/22

(54) **Getriebeantriebseinheit, insbesondere für einen Schiebedachantrieb**
Gear drive unit, in particular for a retractable roof drive
Unité d'entraînement d'engrenage, notamment pour un entraînement de toit coulissant

(30) Priorität: 11.02.2009 DE 102009000760
(43) Veröffentlichungstag der Anmeldung: 18.08.2010
(73) Patentinhaber: Robert Bosch GmbH, 70442 Stuttgart (DE)
(72) Erfinder: Heitz, Robert, 76437, Rastatt (DE); Braun, Roland, 77815, Buehl (DE); Steuer, Peter, 76149, Karlsruhe (DE)

(56) Entgegenhaltungen:
- EP-A- 0 710 760
- DE-A1- 3 434 093
- DE-A1- 19 522 787
- DE-U1- 9 114 785

## Beschreibung

### Stand der Technik

Die Erfindung betrifft eine Getriebeantriebseinheit, insbesondere für einen Schiebedachantrieb, gemäß dem Oberbegriff des Anspruchs 1.

Eine Getriebeantriebseinheit ist aus der DE 103 60 195 A1 bekannt. Bei der bekannten Getriebeantriebseinheit sind ein zweiteiliges Adapterelement und ein Abtriebselement über eine Längsverzahnung radial miteinander gekoppelt, wobei sowohl das Adapterelement als auch das Abtriebselement auf einer gemeinsamen Achse gelagert sind, die mittels eines zusätzlichen Sicherungselementes das Adapterelement und das Abtriebselement axial zueinander sichert. Nachteilig dabei ist, dass eine derartige Getriebeantriebseinheit relativ viele Bauteile aufweist und einen relativ hohen Montageaufwand benötigt. Ferner neigt die bekannte Getriebeantriebseinheit durch die Längsverzahnung und das Sicherungselement zu Axial- und Verdrehspiel zwischen dem Adapterelement und dem Abtriebselement, was nur durch eine relativ passgenaue und somit relativ teure Fertigung der Einzelteile verhindert werden kann.

Weiterhin ist es bekannt, dass für den Fall, dass der mit dem Adapterelement gekoppelte Antriebsmotor ausgefallen ist, das Adapterelement mittels beispielsweise einer Handkurbel oder ähnlichem anzutreiben. Hierzu ist es bei einer anderen Getriebeantriebseinheit bekannt, an der aus der DE 103 60 195 A1 bekannten Achse an einer Stirnseite der Achse eine zusätzliche Aufnahme für die Handkurbel oder ähnlichem auszubilden, was deren Herstellkosten zusätzlich verteuert.

Mit der DE 195 22 787 A1 ist eine Antriebsvorrichtung mit Schneckengetriebe bekannt geworden, bei der eine Seiltrommel formschlüssig auf eine Abtriebswelle eines Schneckenrads montlerbar ist.

Die gattungsgemäße DE 34 34 093 A1 zeigt eine Getriebeanordnung, bei der ein Schneckenrad auf eine Abtriebswelle aufgespritzt ist. Auf diese Abtriebswelle ist nicht formschlüssig ein Abtriebsritzel montierbar.

Aus der DE 9114 785 U1 ist ebenfalls ein Schneckengetriebe bekannt, bei dem im Zentrum eines Schneckenrads eine Aussparung ausgeformt ist, in die formschlüssig ein Abtriebsritzel montiert werden kann.

### Offenbarung der Erfindung

Der Erfindung liegt daher die Aufgabe zugrunde, die bekannte Getriebeantriebseinheit derart weiterzubilden, dass sie wirtschaftlicher herstellbar ist und möglichst geringe Axial- und Verdrehspiele aufweist.

Diese Aufgabe wird bei einer Getriebeantriebseinheit mit den Merkmalen des Anspruchs 1 gelöst, da durch die unmittelbare Kopplung von Adapterelement und Abtriebselement auf zusätzliche Achsen oder Wellen sowie Befestigungselemente verzichtet werden kann, und gleichzeitig durch die starre Verbindung Axial- und Verdrehspiele minimiert werden. Die starre Kopplung lässt sich herstellungstechnisch umsetzen, wenn das Adapterelement durch zumindest teilweises Umspritzen des Abtriebselements erfolgt, wodurch gleichzeitig ein Formschluss zwischen den Bauteilen herstellbar ist.

Vorteilhafte Weiterbildungen der erfindungsgemäßer Getriebeantriebseinheit sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zum Erhöhen des übertragbaren Drehmoments zwischen dem Adapterelement und dem Abtriebselement ist es vorteilhaft, am Abtriebselement Verzahnungen oder Stege zur Verbesserung des Formschlusses vorzusehen.

Ohne zusätzliche Kosten und Bauteile lässt sich eine Aufnahme für eine Handkurbel oder ähnlichem verwirklichen, wenn diese bereits beim Spritzen des Adapterelements durch eine entsprechende Ausbildung des Spritzwerkzeuges vorgesehen ist, so dass die Aufnahme integral im Adapterelement eingeformt ist.

Um in die Getriebeantriebseinheit eingeleitete Axialkräfte aufzunehmen bzw. abzufangen ist es in einer vorteilhaften Weiterbildung vorgesehen, am Adapterelement Übertragungsbereiche vorzusehen, die mit Aufnahmebereichen im Gehäuse zusammenwirken, so dass das Gehäuse die Axialkräfte aufnehmen kann.

Zusätzlich lassen sich über das Abtriebselement eingeleitete Axialkräfte über einen am Abtriebselement ausgebildeten Absatz auf das Adapterelement übertragen.

Dadurch, dass das Adapterelement und das Abtriebselement eine vorgefertigte Baueinheit ausbilden, ist es bei einem zweiteilig ausgebildeten Gehäuse möglich, die Baueinheit in ein Gehäuseteil einzusetzen, um anschließend durch Aufsetzen bzw. Montieren des zweiten Gehäuseteils die Montage zu vervollständigen. Dadurch wird eine wirtschaftliche Fertigung mit relativ geringem Montageaufwand erzielt.

Weitere Vorteile, Merkmale und Einzelheiten der Erfindung ergeben sich aus der nachfolgenden Beschreibung bevorzugter Ausführungsbeispiele sowie anhand der Zeichnungen.

### Diese zeigen in:

- Fig. 1: einen Längsschnitt durch eine erfindungsgemäße Getriebeantriebseinheit,
- Fig. 2: ein Antriebsritzel der Getriebeantriebseinheit nach Fig. 1 in perspektivischer Ansicht, und
- Fig. 3 und Fig. 4: gegenüber der Fig. 2 abgewandelte Antriebsritzel ebenfalls in perspektivischer Ansicht.

In den Figuren sind gleiche Elemente und Elemente mit der gleichen Funktion mit den gleichen Bezugszeichen gekennzeichnet.

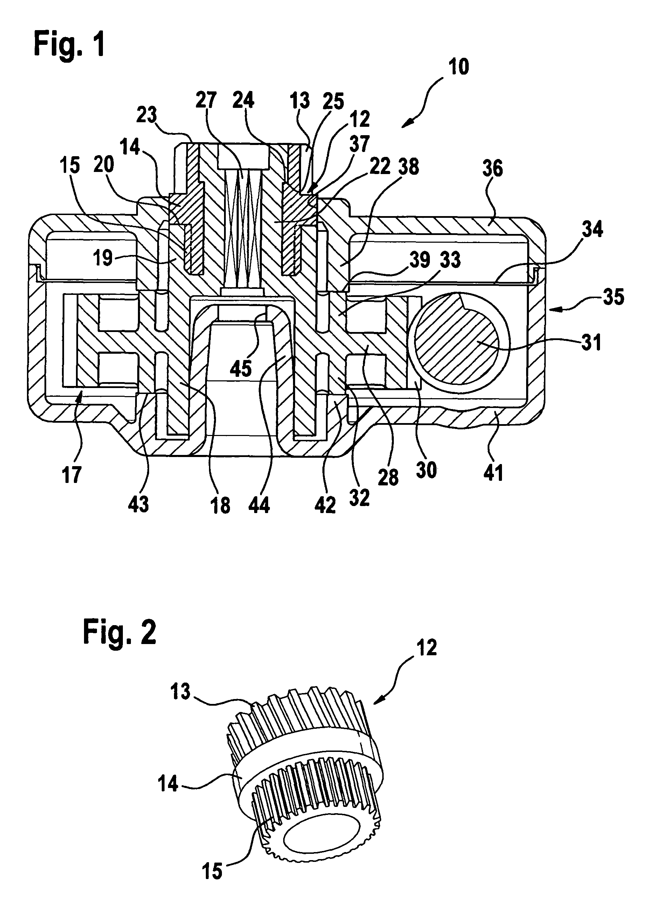

In Fig. 1 ist eine Getriebeantriebseinheit 10 dargestellt, wie sie insbesondere zur Verwendung in einem Schiebedachantrieb eines Kraftfahrzeugs vorgesehen ist. Die Getriebeantriebseinheit 10 weist ein aus Metall, insbesondere aus Sintermetall bestehendes, als Abtriebsritzel 12 ausgebildetes Abtriebselement auf. Das Abtriebsritzel 12 stellt hierbei die Schnittstelle zu dem Schiebedachsystem dar, das sich über eine am Abtriebsritzel 12 ausgebildete schräge Außenverzahnung 13 im Eingriff mit einem nicht dargestellten Übertragungsmittel befindet. Über das Übertragungsmittel wird die Verstellung des Dachmechanismus realisiert.

Das Abtriebsritzel 12 weist gemäß Fig. 2 drei Abschnitte auf: Einen ersten Abschnitt mit der bereits erwähnten ersten Außenverzahnung 13, einen zweiten Abschnitt mit einem Lagerbund 14 und einen dritten Abschnitt mit einer zweiten Außenverzahnung 15. Das soweit beschriebene Abtriebsritzel 12 ist mit einem aus Kunststoff bestehenden, als Schneckenrad 17 ausgebildetem Adapterelement umspritzt und mit diesem durch Formschluss verbunden.

Das Schneckenrad 17 weist einen zentralen, hülsenförmigen Bereich 18 auf, der mit einem Steg 19 bis an die eine Stirnseite 20 des Lagerbundes 14 reicht. An der Innenseite des Steges 19 geht der Kunststoff die formschlüssige Verbindung mit der zweiten Außenverzahnung 15 ein. Mit einem zweiten hülsenförmigen Steg 22 ragt das Schneckenrad 17 in das Abtriebsritzel 12 hinein und schließt bündig mit der oberen Stirnseite 23 des Abtriebsritzels 12 ab. Der Steg 22 weist eine Stufe 24 auf, die sich beim Umspritzen des Abtriebsritzels 12 aufgrund eines an der Innenwand des Abtriebsritzels 12 ausgebildeten Absatzes 25 ergibt. Ferner ist an der Innenwand des zweiten Steges 22 eine als Mitnahmeverzahnung 27 ausgebildete Aufnahme beispielsweise in Form eines Innensechskants ausgebildet bzw. eingeformt. Die Mitnahmeverzahnung 27 dient zum manuellen (Not-) Betrieb des Schiebedaches mittels einer nicht dargestellten Handkurbel oder ähnlichem.

Unterhalb des Abtriebsritzels 12 ist an der Außenseite des hülsenförmigen Bereichs 18 über einen Bund 28 die Außenverzahnung 30 des Schneckenrads 17 angeformt. Die Außenverzahnung 30 ist in Eingriff mit einem als Schneckenwelle 31 ausgebildeten Eingangselement, die das Antriebsmoment eines nicht dargestellten Antriebsmotors für den Schiebedachantrieb an das Schneckenrad 17 bzw. das Abtriebsritzel 12 weiterleitet.

Ober- und unterhalb des Bundes 28 sind an diesem noch ein unterer Lagersteg 32 und ein oberer Lagersteg 33 als Übertragungsbereiche für Axialkräfte angeformt. Die beiden Lagerstege 32, 33 fluchten zueinander und sind parallel und nahe zum Bereich 18 angeordnet.

Das soweit beschriebene Schneckenrad 17 samt Abtriebsritzel 12 ist von einem zweiteiligen, eine horizontale Trennebene 34 aufweisenden Gehäuse 35 umschlossen. Das obere, schalenförmige Gehäuseteil 36 weist eine Öffnung 37 auf, deren Innenfläche den Lagerbund 14 des Abtriebsritzels 12 an dessen Außenumfang umfasst. Ferner ist am oberen Gehäuseteil 36 ein umlaufender Lagersteg 38 als Aufnahmebereich für Axialkräfte ausgebildet, dessen Stirnseite 39 sich in Anlagekontakt mit der korrespondierenden Stirnseite des oberen Lagerstegs 33 des Schneckenrads 17 befindet.

Das untere Gehäuseteil 41 des Gehäuses 35 weist ebenfalls einen radial umlaufenden Lagersteg 42 als Aufnahmebereich für Axialkräfte auf, dessen Stirnseite 43 sich in Anlagekontakt mit der korrespondierenden Stirnseite des unteren Lagerstegs 32 des Schneckenrads 17 befindet. Weiterhin ist am unteren Gehäuseteil 41 ein hutartiger Lager- bzw. Zentrierabschnitt 44 vorgesehen, der in den Bereich 18 des Schneckenrads 17 hineinragt und der nahe der Mitnahmeverzahnung 27 eine Öffnung 45 zum Durchführen der bereits erwähnten Handkurbel oder ähnlichem aufweist.

Die Montage der Getriebeantriebseinheit 10 erfolgt derart, dass die vorgefertigte Baueinheit, bestehend aus Abtriebsritzel 12 und umspritztem Schneckenrad 17 in eines der beiden Gehäuseteile 36 oder 41 eingeführt wird, und dass anschließend das andere Gehäuseteil 41 oder 36 mit der soweit vormontierten Baugruppe verbunden wird, um somit das Gehäuse 35 zu vervollständigen.

Beim Betrieb der Getriebeantriebseinheit 10 ist wesentlich, dass über die Schneckenwelle 31 und die Außenverzahnung 30 des Schneckenrades 17 ggf. eingeleitete Axialkräfte über die Lagerstege 32, 33 des Schneckenrads 17 in das Gehäuse 35 weitergeleitet werden, ohne dass sie an das Abtriebsritzel 12 übertragen werden. Ebenso werden über die (schräge) Außenverzahnung 13 des Abtriebsritzels 12 eingeleitete Axialkräfte über den Absatz 25 und die Stufe 24 in das Schneckenrad 17 und von dort über die Lagerstege 32, 33 in das Gehäuse 35 übertragen.

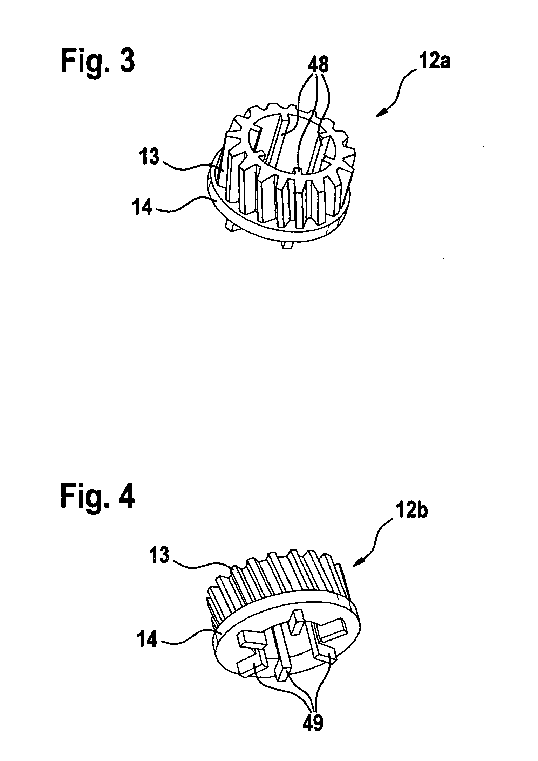

Bei dem in Fig. 3 dargestellten modifizierten Abtriebsritzel 12a weist dieses zur formschlüssigen Verbindung mit dem Schneckenrad an seiner Innenseite ausgebildete Längsstege 48 auf. Das Abtriebsritzel 12a baut insofern kompakter als das Abtriebsritzel 12 gemäß Fig. 2 und weist im Wesentlichen nur zwei Abschnitte auf, einen ersten Abschnitt mit der Außenverzahnung 13 und einen zweiten Abschnitt mit dem Lagerbund 14.

Das in Fig. 4 dargestellte modifizierte Abtriebsritzel 12b weist zur formschlüssigen Verbindung mit dem Schneckenrad auf der dem Abschnitt mit der Außenverzahnung 13 gegenüberliegenden Seite an der Unterseite des Lagerbundes 14 sich radial erstreckende Stege 49 auf.

Ergänzend wird erwähnt, dass die Stege 49 des Abtriebsritzels 12b auch zusätzlich am Abtriebsritzel 12a realisiert werden können. Ebenso ist es denkbar, die Längsstege 48 des Abtriebsritzels 12a zusätzlich am Abtriebsritzel 12 gemäß Fig. 2 vorzusehen.

## Patentansprüche

1. Getriebeantriebseinheit, insbesondere für einen Schiebedachantrieb, mit einem aus Kunststoff bestehenden Adapterelement (17), über das ein Drehmoment von einem Eingangselement (31) eingeleitet wird und einem Abtriebselement (12; 12a; 12b) zur Weiterleitung des Drehmoments, wobei das Adapterelement (17) und das Abtriebselement (12; 12a; 12b) unmittelbar miteinander gekoppelt und starr verbunden sind, **dadurch gekennzeichnet, dass** in dem Adapterelement (17) eine Aufnahme (27) zur Einleitung eines Drehmoments mittels eines vom Eingangselement (31) unterschiedlichen Antriebselements eingeformt ist.

2. Getriebeantriebseinheit nach Anspruch 1,
**dadurch gekennzeichnet,**
**dass** das Adapterelement (17) und das Abtriebselement (12; 12a; 12b) durch Formschluss miteinander verbunden sind, und dass das Adapterelement (17) ein Spritzgussteil ist, das durch zumindest teilweises Umspritzen des Abtriebsetements (12; 12a; 12b) gebildet ist.

3. Getriebeantriebseinheit nach Anspruch 2,
**dadurch gekennzeichnet,**
**dass** der Formschluss mittels am Abtriebselement (12; 12a; 12b) ausgebildeter Verzahnungen (15) oder Stege (48; 49) erfolgt, und dass das Umspritzen zumindest Im Bereich der Verzahnungen (15) oder der Stege (48; 49) erfolgt.

4. Getriebeantriebseinheit nach einem der Ansprüche 1 bis 3,
**dadurch gekennzeichnet,**
**dass** das Abtriebselement (12; 12a; 12b) als Abtriebsritzel (12) aus Metall - insbesondere aus Sintermetall - ausgebildet ist.

5. Getriebeantriebseinheit nach einem der Ansprüche 1 bis 4,
**dadurch gekennzeichnet,**
**dass** zumindest das Adapterelement (17) innerhalb eines Gehäuses (35) angeordnet ist, das eine Öffnung (37) aufweist, durch die das Abtriebselement (12; 12a; 12b) hindurchragt, wobei am Abtriebselement (12; 12a; 12b) ein Lagerbund (14) vorgesehen ist, der mit der Öffnung (37) im Gehäuse (35) zusammenwirkt.

6. Getriebeantriebseinheit nach Anspruch 5,
**dadurch gekennzeichnet,**
**dass** das Gehäuse (35) auf der der Öffnung (37) gegenüberliegenden Seite einen Lager- und Zentrierabschnitt (44) aufweist, der mit dem Adapterelement (17) zusammenwirkt.

7. Getriebeantriebseinheit nach Anspruch 5 oder 6,
**dadurch gekennzeichnet,**
**dass** an dem Adapterelement (17) wenigstens ein Übertragungsbereich (32, 33) für Axialkräfte ausgebildet ist, und dass der wenigstens eine Übertragungsbereich (32, 33) mit wenigstens einem Aufnahmebereich (38, 42) zusammenwirkt, der im Gehäuse (35) angeordnet ist.

8. Getriebeantriebseinheit nach Anspruch 7,
**dadurch gekennzeichnet,**
**dass** das Gehäuse (35) aus zwei Gehäusetellen (36, 41) besteht, und dass in jedem der Gehäuseteile (36, 41) ein Aufnahmebereich (38, 42) ausgebildet ist, der mit jeweils einem Übertragungsbereich (32, 33) am Adapterelement (17) zusammenwirkt.

9. Getriebeantriebseinheit nach Anspruch 8,
**dadurch gekennzeichnet,**
**dass** die aus Adapterelement (17) und Abtriebselement (12; 12a; 12b) vorgefertigte Baugruppe in eines der Gehäuseteile (36, 41) von einer Seite her einsetzbar ist.

10. Getriebeantriebseinheit nach einem der Ansprüche 5 bis 9,
**dadurch gekennzeichnet,**
**dass** das Abtriebselement (12; 12a; 12b) einen Absatz (25) zur Übertragung von in das Abtriebselement (12; 12a; 12b) eingeleiteten Axialkräften aufweist, und dass der Absatz (25) mit einer korrespondierenden Stufe (24) im Adapterelement (17) zusammenwirkt.

## Claims

1. Gear drive unit, in particular for a retractable roof drive, with an adapter element (17) which is composed of plastic and via which a torque is introduced by an input element (31), and with an output element (12; 12a; 12b) for passing on the torque, wherein the adapter element (17) and the output element (12; 12a; 12b) are coupled directly to each other and are rigidly connected, **characterized in that** a receptacle (27) for introducing a torque by means of a drive element different from the input element (31) is formed in the adapter element (17).

2. Gear drive unit according to Claim 1, **characterized in that** the adapter element (17) and the output element (12; 12a; 12b) are connected to each other by a form-fitting connection, and **in that** the adapter element (17) is an injection-moulded part which is formed by at least partial insert moulding of the output element (12; 12a; 12b).

3. Gear drive unit according to Claim 2, **characterized in that** the form-fitting connection is undertaken by means of teeth (15) or webs (48; 49) formed on the output element (12; 12a; 12b), and **in that** the insert moulding is carried out at least in the region of the teeth (15) or the webs (48; 49).

4. Gear drive unit according to one of Claims 1 to 3, **characterized in that** the output element (12; 12a; 12b) is designed as an output pinion (12) made of metal - in particular of sintered metal.

5. Gear drive unit according to one of Claims 1 to 4, **characterized in that** at least the adapter element (17) is arranged within a housing (35) which has an opening (37) through which the output element (12; 12a; 12b) protrudes, wherein a bearing collar (14) which interacts with the opening (37) in the housing (35) is provided on the output element (12; 12a; 12b).

6. Gear drive unit according to Claim 5, **characterized in that** that side of the housing (35) which lies opposite the opening (37) has a bearing and centring section (44) which interacts with the adapter element (17).

7. Gear drive unit according to Claim 5 or 6, **characterized in that** at least one transmission region (32, 33) for axial forces is formed on the adapter element (17), and **in that** the at least one transmission region (32, 33) interacts with at least one receiving region (38, 42) which is arranged in the housing (35).

8. Gear drive unit according to Claim 7, **characterized in that** the housing (35) consists of two housing parts (36, 41), and **in that** a receiving region (38, 42) which interacts with one transmission region (32, 33) in each case on the adapter element (17) is formed in each of the housing parts (36, 41).

9. Gear drive unit according to Claim 8, **characterized in that** the subassembly premanufactured from the adapter element (17) and output element (12; 12a; 12b) is insertable into one of the housing parts (36, 41) from one side.

10. Gear drive unit according to one of Claims 5 to 9, **characterized in that** the output element (12; 12a; 12b) has a shoulder (25) for transmitting axial forces introduced into the output element (12; 12a; 12b), and **in that** the shoulder (25) interacts with a corresponding step (24) in the adapter element (17).

## Revendications

1. Unité d'entraînement par engrenages, en particulier pour un entraînement de toit coulissant, comprenant un élément adaptateur (17) constitué de plastique, par l'intermédiaire duquel un couple est appliqué par un élément d'entrée (31), et comprenant un élément de sortie (12 ; 12a ; 12b) pour la transmission du couple, l'élément adaptateur (17) et l'élément de sortie (12 ; 12a ; 12b) étant accouplés directement l'un à l'autre et reliés rigidement, **caractérisée en ce qu'**un logement (27) est formé dans l'élément adaptateur (17) pour l'application d'un couple au moyen d'un élément d'entraînement différent de l'élément d'entrée (31).

2. Unité d'entraînement par engrenages selon la revendication 1,
**caractérisée en ce que**
l'élément adaptateur (17) et l'élément de sortie (12 ; 12a ; 12b) sont reliés l'un à l'autre par engagement par complémentarité de formes, et **en ce que** l'élément adaptateur (17) est une pièce moulée par injection qui est formée par surmoulage au moins partiel de l'élément de sortie (12 ; 12a ; 12b).

3. Unité d'entraînement par engrenages selon la revendication 2,
**caractérisée en ce que**
l'engagement par complémentarité de formes s'effectue au moyen de dentures (15) ou de nervures (48 ; 49) réalisées sur l'élément de sortie (12 ; 12a ; 12b), et **en ce que** le surmoulage s'effectue au moins dans la région des dentures (15) ou des nervures (48 ; 49).

4. Unité d'entraînement par engrenages selon l'une quelconque des revendications 1 à 3,
**caractérisée en ce que**
l'élément de sortie (12 ; 12a ; 12b) est réalisé en tant que pignon de sortie (12) en métal, en particulier en métal fritté.

5. Unité d'entraînement par engrenages selon l'une quelconque des revendications 1 à 4,
**caractérisée en ce**
**qu'**au moins l'élément adaptateur (17) est disposé à l'intérieur d'un boîtier (35) qui possède une ouverture (37) qui est traversée par l'élément de sortie (12 ; 12a ; 12b), un épaulement de palier (14) étant prévu sur l'élément de sortie (12 ; 12a ; 12b), lequel épaulement de palier coopère avec l'ouverture (37) dans le boîtier (35).

6. Unité d'entraînement par engrenages selon la revendication 5,
**caractérisée en ce que**
le boîtier (35) comprend une section de palier et de centrage (44) du côté opposé à l'ouverture (37), laquelle section coopère avec l'élément adaptateur (17).

7. Unité d'entraînement par engrenages selon la revendication 5 ou 6,
**caractérisée en ce**
**qu'**au moins une région de transfert (32, 33) pour des forces axiales est réalisée sur l'élément adaptateur (17), et en ce que l'au moins une région de transfert (32, 33) coopère avec au moins une région de réception (38, 42) qui est disposée dans le boîtier (35).

8. Unité d'entraînement par engrenages selon la revendication 7,
**caractérisée en ce que**
le boîtier (35) est constitué de deux parties de boîtier (36, 41), et **en ce qu'**une région de réception (38, 42) est réalisée dans chacune des parties de boîtier (36, 41), laquelle région de réception coopère avec une région de transfert (32, 33) respective sur l'élément adaptateur (17).

9. Unité d'entraînement par engrenages selon la revendication 8,
**caractérisée en ce que**
le module préfabriqué à partir de l'élément adaptateur (17) et de l'élément de sortie (12 ; 12a ; 12b) peut être inséré dans l'une des parties de boîtier (36, 41) depuis un côté.

10. Unité d'entraînement par engrenages selon l'une quelconque des revendications 5 à 9,
**caractérisée en ce**
**que** l'élément de sortie (12 ; 12a ; 12b) comprend un épaulement (25) pour le transfert des forces axiales appliquées dans l'élément de sortie (12 ; 12a ; 12b), et en ce que l'épaulement (25) coopère avec un gradin (24) correspondant dans l'élément adaptateur (17).
